# EUROPEAN PATENT SPECIFICATION

(11) **EP 2 720 846 B1**
(45) Date of publication and mention of the grant of the patent: **05.10.2016**
(21) Application number: 12801147.5
(22) Date of filing: 18.06.2012
(51) Int. Cl.: B29C 33/38, B29C 61/04, B29C 70/44, B29C 70/86

(54) **MANUFACTURING A COMPOSITE END PIECE WITH AN INTEGRAL JOURNAL**
HERSTELLUNG EINES ZUSAMMENGESETZTEN ENDSTÜCKS MIT INTEGRIERTEM ZAPFEN
FABRICATION D'UNE PIÈCE D'EXTRÉMITÉ COMPOSITE AVEC TOURILLON INTÉGRÉ

(30) Priority: 17.06.2011 SE 1150552; 17.06.2011 US 201161498122 P
(43) Date of publication of application: 23.04.2014
(73) Proprietor: Examec Holding AB, 273 97 Tomelilla (SE)
(72) Inventor: OHLSSON, Mats, S-236 42 Höllviken (SE)
(74) Representative: Awapatent AB
(86) International application number: PCT/SE2012/050664
(87) International publication number: WO 2012/173569

(56) References cited:
- EP-A1- 1 000 725
- EP-A2- 0 415 207
- WO-A1-02/02298
- WO-A1-2008/066606
- DE-A1- 4 220 901
- JP-A- 5 131 555
- JP-A- 2000 238 141
- US-A- 5 084 219
- US-A1- 2002 001 689
- US-B1- 6 174 484

## Description

### Technical field

The present invention relates generally to the manufacturing of a composite end piece with an integral journal for a cylinder or roller. More particularly, the present invention relates to a kit of parts for manufacturing an end piece with an integral journal from a composite material for a cylinder or roller as defined in the introductory parts of claim 1. The invention further relates to a method for the manufacturing of such a composite end piece.

### Background art

Rollers and cylinders used in different kinds of machines for feeding flat medium are traditionally made of steel or other metals. It may be rollers used in the industry, e.g. paper manufacturing, news paper printing etc, but it may also be rollers for smaller machines as printers, cash registers etc. Metal rollers are, however, relatively heavy requiring a lot of energy to be rotated and stopped. Unfavorable thermal properties, results in diminishing precision as they get warmer and self resonance properties are often such that rotation speed is limited. The development has due to these limitations been made to manufacture rollers and cylinders in composite materials reducing weight as well as obtaining more favourable self resonance and thermal properties. Fiber reinforced materials like carbon fiber or glass fiber have been used to produce strong rollers and cylinders to replace the steel rollers. The rollers have traditionally been equipped with end pieces that are made of steel, since the end pieces have to be very accurately made to fit a journal in the center with high precision. The high precision is required to avoid vibrations and uneven movement in the rotation of the roller.

Since steel and other metals are fairly easy to use creating high precision equipment, it has been continuously used for rollers in spite of the above mentioned limitations. It is however still desired to further reduce the weight of the rollers and to develop a roller having higher precision at all temperatures.

EP-A-1000725 discloses a number of parts for manufacturing of a tubular element which changes in diameter, the parts comprising:
an outer mould having a coefficient of thermal expansion of A, an inner mould having a coefficient of thermal expansion of B that is higher than A and a fusible composite material wherein, said fusible composite material is adopted to cover the inner surface of said outer mould, said inner mould is adopted to be positioned inside said outer mould so that the inner mould is adjacent to said fusible composite material, said kit of parts further comprising locking means to lock said outer mould and said inner mould in their positions as in the figures the respective stepped moulding surfaces prevents relative axial movements of the outer and inner moulds.

### Summary of the invention

It is an object of the present invention to improve the current state of the art, to solve the above problems, and to provide an improved end piece for a roller or cylinder and an improved method for manufacturing an end piece for a roller or cylinder. These and other objects are achieved by a kit of parts for manufacturing an end piece as defined in claim 1.

The fusible composite material including its bonding means is adopted to cover the inner surface of said outer mould, and the inner mould is adopted to be positioned inside said outer mould so that the inner mould is adjacent to said fusible composite material.

When the kit of parts is heated, the inner mould will expand more than the outer mould and reduce the distance between the inner and outer moulds, where the composite material is located. At the same time the composite material will cure when the assembly is heated. The composite material will thus cure under high pressure, producing an end piece having higher material strength than if it would have been cured at atmospheric pressure. Pressure molding is traditionally done using an inflatable elastic inner mould that will press against the outer mould and the material to be molded. The present invention using an inner mould that is made of a rigid material having a high density and accurate thermal expansion properties will however be much more accurate and exert more force in its expansion, producing products with more precise measures. Such an inner mould is also more robust. The inner mould could e.g. be made of a metal, a thermally resistive polymer, or any material that withstands temperature and pressure. The outer mould may be made of similar materials as long as the outer mould has a thermal expansion coefficient that is lower than the inner mould. If the material of the outer mould is a metal or metal alloy, the inner mould may be made of a metal or metal alloy having a higher thermal expansion than the metal or metal alloy of the outer mould. The difference in thermal expansion is chosen so that is applies the desired pressure on the material in between that is to be moulded. A feasible combination is e.g. to use steel for the outer mould and aluminum for the inner mould.

The kit of parts is used to produce an end piece with an integral journal for a roller or cylinder of a composite material. An end piece with a journal in composite material will be much lighter than end pieces according to the state of the art that are made of metal, saving energy when rotating the cylinder or roller. The dimensional stability, due to thermal properties, of the end piece and journal will also be higher than for a metal counterpart. Since composite materials have very low coefficients of thermal expansion, the journal and end piece will have less problems due to heat expansion when the cylinder is used.

The bonding means for the composite material is of two types Thermosets and Thermoplastics e.g. epoxy, polyester, vinylester or nylon but may be any polymer that is generally used for the chosen composite material and thus known by craftsmen in the art.

This invention further aims at addressing limitations due to unfavorable thermal properties of metal journals and end pieces, resulting in diminishing precision as they get warmer, and poor self resonance properties that are such that rotation speed is limited. In order to increase the efficiency of the use of rollers while still making use of the favorable precision properties of metals, the present invention provides a roller end piece and journal that combines metal with the favorable strength, weight and resonance properties of composites. The kit of parts may therefore further comprise at least one hollow piece / sleeve having a coefficient of thermal expansion of C that is lower than B and equal to or higher than A, said hollow piece / sleeve being adopted to be positioned between the inner surface of said outer mould and said fusible composite material, the hollow piece / sleeve abutting the outer mould around its peripheral surface and the fusible composite material around its inner surface.

The hollow piece / sleeve may be a ring or cylinder that is placed between the composite material and the outer mould. When the kit of parts is heated with the hollow piece / sleeve in place, the outer mould will expand less or as much as the hollow piece / sleeve, while the inner mould will expand the most from the parts in the kit of parts. The composite material has a very low coefficient of thermal expansion but will be forced to expand by the other parts. When the composite material has cured, the temperature of the kit of parts is lowered. The inner mould will then shrink the most due to the decrease in temperature and is easily removed. The outer mould and hollow piece / sleeve will also shrink when the temperature is decreased while the composite material will shrink very little. The hollow piece / sleeve will thus be pressed towards the composite shape by shrinkage tension producing a high friction fitting between the hollow piece / sleeve and the composite material journal. This in combination with the adhesive properties of the bonding means, e.g. epoxy or similar material, the hollow piece / sleeve will fit securely to the journal part of the composite end piece.

The hollow piece / sleeve, being a ring, cylinder or the like, is intended to be used for fastening the journal in other equipment with high precision as e.g. a ring bearing or any other holding arrangement in which the cylinder or roller may be mounted for rotational movement. The wall of the hollow piece / sleeve is preferably thin to reduce weight and to reduce problems induced by thermal expansion. The procedure to place the hollow piece / sleeve in the outer mould before the application of the composite material, so that the attachment of the hollow piece / sleeve to the end piece with integrated journal is achieved in the moulding process, makes the precision of the placement of the hollow piece / sleeve very accurate. The hollow piece / sleeve can also be additionally machined after assembly in for example a lathe to achieve perfect precision. When e.g. gluing a ring to a premanufactured end piece, it is much more difficult to attach a ring with high precision. The glue attachment will also be much weaker with regard to rotational force, than.the ring attached with shrinkage tension and optionally also adhesive as in the present invention.

The hollow piece / sleeve is also attached to the end piece in the same manufacturing operation as the production of the end piece itself, saving a step in the manufacturing process that would otherwise be necessary. This will save costs when manufacturing the roller or cylinder.

The kit of parts may according to the present invention further have an outer mould that is hollow having an inner surface that is substantially rotation symmetrical around a centre axis. Since the end piece with the integral journal is intended to rotate, it is natural to have a rotational symmetric shape, although it is not necessary for most of the advantages of the invention. The outer mould may further be detachable from two pieces for easier removal of the composite end piece. The two pieces may in that case have projections and recesses adapted so that projections from one piece are engaged with recesses in the other piece. Such an engagement will fixate the pieces to each other so that movements, e.g. due to thermal expansion, will be minimized, maximizing the precision of the mould. The two pieces may also be hinged at one side having a locking mechanism in the other for securely fastening of the two parts to each other when the outer mould is assembled for moulding.

The cavity of the kit of parts according to the present invention further preferably has an outer mould that has a first inner diameter at one end along the centre axis that is bigger than a second inner diameter at the other end along the centre axis, wherein the inner diameter does not increase at any point along said centre axis from said first to said second inner diameter. The shape could be that of a truncated cone, but could also be shaped as the top of a bottle, to increase the structural strength. If the diameter continuously increase from one side to the other of the end piece, it is easier to remove the product from the outer mould after curing if the outer mould is in one piece. It is also desired to have a shape that presents a journal where the hollow piece / sleeve may be fastened.

It is further preferred that the inner mould has substantially the same outer shape as the inner shape of the outer mould, the inner mould having a smaller outer diameter than the inner diameter of the outer mould. When the outer and inner moulds have the same shape, the composite material product will have the same wall thickness across its length.

The inner mould may further be a solid central plug. A solid central plug is more robust and will have a more predictable heat expansion than a hollow plug, which is an important feature in the present invention. The level of thermal expansion controls the wall thickness of the cured end piece, the pressure during bonding and also to some extent the shrinkage tension that is eventually created between the hollow piece / sleeve and the integral journal of the composite end piece.

The kit of parts according to the present invention may further have a thermal expansion coefficient A of the outer mould that is equal to thermal expansion coefficient C of the hollow piece / sleeve.

The kit of parts according to the present invention comprises locking means to lock said outer mould and said inner mould in their positions so that the volume between the outer and inner mould is well defined and so the heat expansion of the moulds is precisely controlled.

The hollow piece / sleeve of the present invention may be made of the shape contained in the group consisting of a ring, a cylinder, a conic cylinder, a tube, a gear etc. Which type of hollow piece / sleeve that is chosen depends on the intended application of the roller. The hollow piece / sleeve may further be adapted to engage a device contained in the group consisting of a gear wheel, a bearing, a surface, a belt wheel, a drive mechanism, a sprocket, a spacer etc. The type of equipment it is engaged to depends on the intended application of the roller. It should be noted that the gear wheel or bearing also could be attached directly in the moulding process if it can be positioned accurately enough or adjusted by subsequent machining.

The kit of parts according to the present invention further preferably has a fusible material comprising one of the materials contained in the group of: carbon fiber, glass fiber, reinforced composites, composite matrixes, spiral wound or multilayered composite matrixes The fusible materials could be any curable polymer (plastic material) possible to heat to a temperature of 100° or higher. The bonding means is preferably pre-impregnated in the composite material components mentioned above but may also be added to the material when applied in the outer mould. The bonding means could e.g. be epoxy, vinyl ester or polyester, or any other suitable adhesive. It should be noted that other fusible materials than the mentioned could be used within the scope of the present invention.

The kit of parts according to the present invention may further comprise members to close the mould at least one end along the centre axis. If the mould is sealed at its ends, the pressure could be higher in the mould when increasing the temperature, since the material is stopped from expanding out from the mould at its ends along the center axis.

The kit of parts according to the present invention may further comprise heating means for heating said kit of parts. The heating means could e.g. be integrated in the outer mould in the form of heating wires wound inside or outside the outer mould. Integrated heating means, preferably with integrated thermocouples and control means for controlling the temperature of the mould, makes the mould easier to use and more compact.

According to a further embodiment of the present invention a kit of parts is provided for manufacturing a cylinder or roller, wherein the kit of parts comprises at least one kit of parts according what has been described above for manufacturing of an end piece with an integral journal from a composite material, and a cylinder or roll. Preferable a roller is fitted with an end piece at each end of it, to provide the roller with journals around which it may be rotated. To keep weight down in accordance with one of the advantages of the invention, the roller is preferably made from a light-weight material such as e.g. carbon fiber, glass fiber, or another composite material. It should, however, be noted that the advantage of higher precision of the composite end piece according to the present invention compared to prior art end pieces and journals is valid also when fitting the inventive end pieces to a heavier roller made from e.g. steel or other metals.

The present invention further include a method for manufacturing an end piece from a composite material with an integral journal from a metallic, ceramic, composite or otherwise composite material for a cylinder or roller, the method utilizing a kit of parts as described above,
the method comprising the steps of:
position said at least one hollow piece/sleeve in said outer mould, the hollow piece / sleeve abutting the outer mould around its peripheral surface,
position said fusible composite material to cover the inner surface of said outer mould and said at least one hollow piece / sleeve,
position said inner mould inside said outer mould so that the inner mould is adjacent to said fusible material,
lock said outer mould (3) and said inner mould (1) in their positions, heat said outer mould, said inner mould, said hollow piece / sleeve and said fusible material until the fusible material has cured.

The method may further comprise the step of: cooling said kit of parts so that the inner plug shrinks and is released and the cured composite end piece is pushed out of the shrunk outer mould in the direction of said first inner diameter of the outer mould along the centre axis. This step, however, require that the outer mould has an inner surface without recesses.

It should be noted that the inventive method may incorporate any of the features described above in association of the inventive kit of parts and has the same corresponding advantages.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 shows the inner and outer moulds with hollow piece / sleeve according to the present invention, where the hollow piece / sleeve is attached to the narrower journal part of the roller.
Fig. 2 shows the inner and outer moulds with hollow piece / sleeve according to the present invention, where the hollow piece / sleeve is attached to a wide part of the roller.

### Detailed description of preferred embodiments of the invention

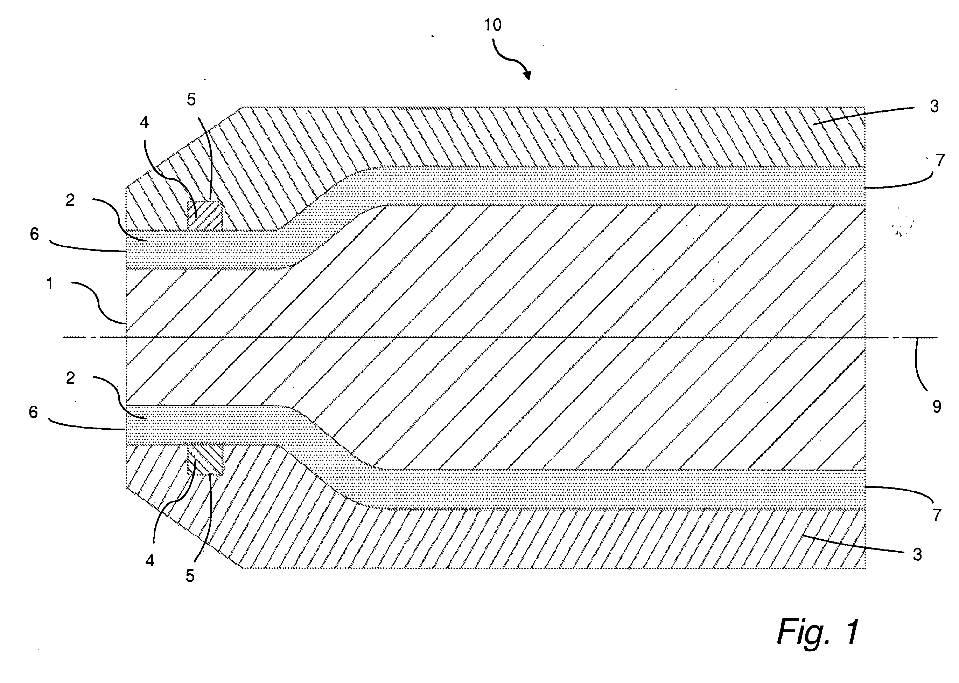

Fig. 1 shows a mould according to the present invention. The mould is rotational symmetric around the central axis 9 and comprise an inner mould 1 in the form of a central solid plug, an outer mould 3, and a hollow piece / sleeve 4 in the form of a ring. The hollow piece / sleeve 4 is positioned between the moulds 1, 3 at the narrow journal part of end piece. Between the inner mould 1 and the outer mould 3 is a composite material located. The outer mould may be split in two parts (not shown) through the longitudinal central axis 9 or along an axis that is lateral to the central axis. The two pieces of the outer mould may in that case include locking means (not shown) and or hinge means (not shown). The pieces may further comprise projections and recesses (not shown) adapted so that projections from one piece are engaged with recesses in the other piece.

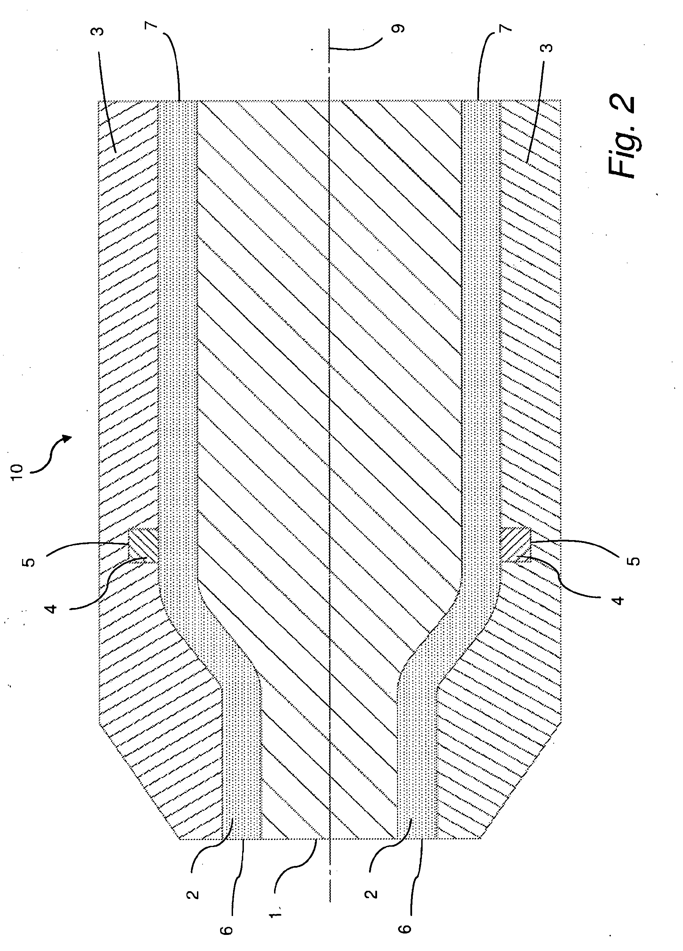

Fig. 2 shows another embodiment of the invention wherein the hollow piece / sleeve 4 is positioned between the mould 1, 3 at a wider part of the end piece. The skilled man realizes that the hollow piece / sleeve 4 may be positioned at any point along the center axis 9 of the end piece 10. The choice of position may e.g. be dependent on the desired diameter of the hollow piece / sleeve 4, which in turn my be dependent on the intended use and how the roller end piece will be connected to other equipment.

When utilizing the kit of parts according to the present invention using the method of the present invention, the outer mould 3 is assembled and the hollow piece / sleeve 4 is positioned in its place in the outer mould 4. Composite material is applied over the inner surface of the outer mould 3 and over the inner surface of the hollow piece / sleeve 4 that is positioned in the outer mould. The outer mould may contain a recess 5 for the hollow piece / sleeve to be fitted into. If bonding means is not already included in the composite matrix it is added. The inner mould 1 in the form of a central plug is then inserted into the outer mould so that it presses the composite material against the outer mould 3. According to one embodiment of the present invention the mould parts 1, 3, 4 are now locked in their positions so that they cannot move in any direction. This may be done in combination with closing the mould at its open ends 6, 7 along the central axis 9 so that the composite material is completely confined inside the mould.

When the kit of parts is ready for bonding of the composite material, the temperature of the kit of parts 10 is increased. This may be done by utilizing internal heating means (not shown) built into or attached to the outer mould 3 or the inner mould 1. If the inner and/or outer mould has no heating means, external heating means may be used as e.g. an oven, a heating wire, induction heating means, or any other industrially available heating means. The temperature is increased to a predetermined target temperature at which the composite material cures. As the temperature increases the outer mould 3, the hollow piece / sleeve 4, and the inner mould 1 all expand according to their coefficients of thermal expansion. The outer mould 3 and the hollow piece / sleeve 4 are often made of the same material, e.g. steel, and will thus expand equally much. The inner mould 1, being made from another metal, e.g. aluminum, having a higher coefficient of thermal expansion than the outer mould 3 and the hollow piece / sleeve 4, will expand more than the other two parts. The composite material being trapped between the inner mould 1 and the outer mould 3 and part no. 4, will be pressed by the inner mould 1 towards the outer mould 3 and the hollow piece / sleeve 4. The composite material 2, e.g. the carbon fiber matrix, has a very small coefficient of thermal expansion, and will thus be forced to expand. This can be done since the bonding process is incomplete when the expansion of the metal parts 1, 3, 4 occur and the composite material and its bonding means has still not cured.

If the end openings 6, 7 of the mould at its longitudinal ends are closed so that composite material cannot be pressed out through the end openings 6, 7, the pressure in the cavity between the outer 3 and inner 1 moulds will rise. This results in that the pressure during bonding increases, leading to a stronger composite material 2.

When the bonding process is complete, the temperature is decreased again. All metal parts 1, 3, 4 will shrink according to their coefficients of thermal expansion. The central plug 1, having the highest coefficient of thermal expansion will shrink the most. The outer mould 3 and the hollow piece / sleeve 4 will also shrink. The composite material that has now cured will, however, not shrink in the same amount as the metal mould parts 1, 3, 4, due to a much lower coefficient of thermal expansion. This will lead to that the hollow ring 4 shrinks and is pressed with a shrinkage tension applied to the composite end piece. The outer mould 3 will also shrink more than the composite end piece 2 and either apply tension to the cured end piece 2 or press out the composite end piece 2 through the largest opening of the outer mould 7. If the hollow piece / sleeve is inserted in a recess 5, the latter might however be prevented to be pressed out by the hollow ring 4 that is now securely fastened to the end piece. In that case it is necessary to have an outer mould that is divided into two parts, and that can be opened after the kit of parts has been cooled. The parts of the outer mould 3 could also be opened during the cooling procedure to avoid unnecessary shrinkage tension from the outer mould 3 of the cured composite end piece 2.

When the end piece 2 is removed from the mould 3, the hollow piece / sleeve 4 is securely fastened to the end piece 2 by shrinkage tension and adhesive forces between cured bonding means and the hollow piece / sleeve 4. The hollow piece / sleeve 4 is thus well equipped to transfer rotational force from a driving force to the end piece and a roller attached to the end piece 2.

When the end piece 2, having a strongly attached hollow piece / sleeve 4, has been removed from the mould, the cylinder of the roller itself and other equipment is mounted to the end pieces 2. The ready roller or cylinder is then inserted in its intended product, e.g. a printer, a fax machine, a paper sorting machine or the like. The journal that is integral in the end piece, having the strongly attached hollow piece / sleeve 4, is equipped with a gear wheel, a bearing, a surface, a belt wheel, a drive mechanism or the like. This equipment is attached so that the roller or cylinder is able to roll with low friction in the case of a bearing or be driven by a drive mechanism in the case of a gear wheel or belt wheel.

In the figures and in the description above, the inventive end piece is described to be circular, but it should be understood that other rotational symmetrical shapes also may be used. The shape may also be non-rotational symmetrical having, e.g. a flat shape, still having the advantages of the present invention.

## Claims

1. Kit of parts (10) for manufacturing of an end piece (2) with an integral journal from a composite material for a cylinder or roller, the kit of parts (10) comprising:
an outer mould (3) having a coefficient of thermal expansion of A,
an inner mould (1) having a coefficient of thermal expansion of B that is higher than A, and
a fusible composite material,
wherein, said fusible composite material is adopted to cover the inner surface of said outer mould (3), said inner mould (1) is adopted to be positioned inside said outer mould (3) so that the inner mould (1) is adjacent to said fusible composite material, said kit of parts further comprising locking means to lock said outer mould (3) and said inner mould (1) in their positions, at least one hollow piece / sleeve (4) having a coefficient of thermal expansion of C that is lower than B and equal to or higher than A, said hollow piece / sleeve (4) being adopted to be positioned between the inner surface of said outer mould (3) and said fusible composite material, the hollow piece / sleeve (4) abutting the outer mould (3) around its peripheral surface and the fusible composite material around its inner surface.

2. Kit of parts (10) according to any one of the preceding claims, wherein the outer mould (3) is hollow having an inner surface that is substantially rotation symmetrical around a centre axis (9).

3. Kit of parts (10) according to any one of the preceding claims, wherein the cavity of the outer mould (3) has a first inner diameter at one end along the centre axis (9) that is bigger than a second inner diameter at the other end along the centre axis (9), wherein the inner diameter does not increase at any point along said centre axis (9) from said first to said second inner diameter.

4. Kit of parts (10) according to any one of the preceding claims, wherein said inner mould (1) has substantially the same outer shape as the inner shape of the outer mould (3), the inner mould (1) having a smaller outer diameter than the inner diameter of the outer mould (3).

5. Kit of parts (10) according to any one of the preceding claims, wherein said inner mould (1) is a solid central plug.

6. Kit of parts (10) according to any one of the preceding claims, wherein thermal expansion coefficient A is equal to thermal expansion coefficient C.

7. Kit of parts (10) according to any one of the preceding claims, wherein said hollow piece / sleeve (4) is made of the shape contained in the group consisting of
a ring, a cylinder, a conic cylinder, a tube, a gear.

8. Kit of parts (10) according to any one of the preceding claims, wherein the hollow piece / sleeve (4) is adapted to engage a device contained in the group consisting of for example
a gear wheel, a bearing, a surface, a belt wheel, a drive mechanism.

9. Kit of parts (10) according to any one of the preceding claims, wherein the fusible material comprise at least one of the materials contained in the group of:
carbon fiber with bonding means, glass fiber with bonding means, reinforced composites, composite matrixes, spiral wound or multilayered composite matrixes.

10. Kit of parts (10) according to any one of the preceding claims, further comprising members to close the mould at at least one end along the centre axis (9).

11. Kit of parts (10) according to any one of the preceding claims, further comprising heating means for heating said kit of parts.

12. Kit of parts (10) for manufacturing a cylinder or roller, wherein the kit of parts (10) comprises
at least one kit of parts according to any one of the preceding claims, and
a cylinder or roller.

13. Method for manufacturing an end piece (2) from a composite material with an integral journal from a metallic, ceramic, composite or otherwise composite material for a cylinder or roller, the method utilizing
a kit of parts (10) according to any one of the preceding claims,
the method comprising the steps of:
position said at least one hollow piece / sleeve (4) in said outer mould (3), the hollow piece / sleeve (4) abutting the outer mould (3) around its peripheral surface,
position said fusible composite material to cover the inner surface of said outer mould (3) and said at least one hollow piece / sleeve (4),
position said inner mould (1) inside said outer mould (3) so that the inner mould (1) is adjacent to said fusible material,
lock said outer mould (3) and said inner mould (1) in their positions,
heat said outer mould (3), said inner mould (1), said hollow piece / sleeve (4) and said fusible material until the fusible material has cured.

14. Method according to claim 13, further comprising the step of:
cooling said kit of parts (10) so that the inner plug shrinks and is released and the cured composite end piece (2) is pushed out of the shrunk outer mould (3) in the direction of said first inner diameter of the outer mould (3) along the centre axis (9).

## Patentansprüche

1. Baukasten von Teilen (10) zum Herstellen eines Endstücks (2) mit einem integrierten Zapfen aus einem Verbundmaterial für einen Zylinder oder eine Walze bzw. Rolle, wobei der Baukasten von Teilen (10) umfasst:
eine äußere Gießform (3) mit einem Wärmeausdehnungskoeffizienten von A,
eine innere Gießform (1) mit einem Wärmeausdehnungskoeffizienten von B, der größer als der von A ist, und
ein schmelzbares Verbundmaterial,
wobei
das schmelzbare Verbundmaterial dafür ausgelegt ist, die innere Oberfläche der äußeren Gießform (3) zu bedecken,
wobei die innere Gießform (1) dafür ausgelegt ist, innerhalb der äußeren Gießform (3) derart positioniert zu werden, dass die innere Gießform (1) benachbart zu dem schmelzbaren Verbundmaterial liegt,
wobei der Baukasten von Teilen ferner umfasst:
Verriegelungsmittel, um die äußere Gießform (3) und die innere Gießform (1) in ihren Positionen zu verriegeln,
mindestens ein hohles Stück /eine hohle Hülse (4) mit einem Wärmeausdehnungskoeffizienten von C, der kleiner als der von B und gleich oder größer als der von A ist, wobei das hohle Stück / die hohle Hülse (4) dafür ausgelegt ist, zwischen der inneren Oberfläche der äußeren Gießform (3) und des schmelzbaren Verbundmaterials positioniert zu werden, wobei das hohle Stück / die hohle Hülse (4) an die äußere Gießform (3) um ihre Umfangsoberfläche und an das schmelzbare Verbundmaterial um ihre innere Oberfläche angrenzt.

2. Baukasten von Teilen (10) nach einem der vorhergehenden Ansprüche, wobei die äußere Gießform (3) hohl ist mit einer inneren Oberfläche, die im Wesentlichen rotationssymmetrisch um eine Mittelachse (9) ist.

3. Baukasten von Teilen (10) nach einem der vorhergehenden Ansprüche, wobei der Hohlraum der äußeren Gießform (3) einen ersten inneren Durchmesser an einem Ende entlang der Mittelachse (9) aufweist, der größer als ein zweiter innerer Durchmesser an dem anderen Ende entlang der Mittelachse (9) ist, wobei der innere Durchmesser an keinem Punkt entlang der Mittelachse (9) von dem ersten zu dem zweiten inneren Durchmesser ansteigt.

4. Baukasten von Teilen (10) nach einem der vorhergehenden Ansprüche, wobei die innere Gießform (1) im Wesentlichen dieselbe äußere Form wie die innere Form der äußeren Gießform (3) aufweist, wobei die innere Gießform (1) einen kleineren Durchmesser als der innere Durchmesser der äußeren Gießform (3) aufweist.

5. Baukasten von Teilen (10) nach einem der vorhergehenden Ansprüche, wobei die innere Gießform (1) ein fester zentraler Pfropfen ist.

6. Baukasten von Teilen (10) nach einem der vorhergehenden Ansprüche, wobei der Wärmeausdehnungskoeffizient A gleich dem Wärmeausdehnungskoeffizient C ist.

7. Baukasten von Teilen (10) nach einem der vorhergehenden Ansprüche, wobei das hohle Stück / die hohle Hülse (4) aus der Form hergestellt ist, die in der Gruppe enthalten ist, die aus einem Ring, einem Zylinder, einem konischen Zylinder, einem Rohr und einem Zahnrad besteht.

8. Baukasten von Teilen (10) nach einem der vorhergehenden Ansprüche, wobei das hohle Stück / die hohle Hülse (4) dafür ausgelegt ist, eine Vorrichtung in Eingriff zu nehmen, die in der Gruppe enthalten ist, die zum Beispiel
aus einem Zahnrad, einem Lager, einer Oberfläche, einem Riemenrad und einem Antriebsmechanismus besteht.

9. Baukasten von Teilen (10) nach einem der vorhergehenden Ansprüche, wobei das schmelzbare Material mindestens eines der Materialien umfasst, das in der folgenden Gruppe enthalten ist:
Kohlefaser mit Verstärkungsmitteln, Glasfaser mit Verstärkungsmitteln, verstärkte Verbundwerkstoffe, Matrix-Verbundwerkstoffe, spiralgewickelte oder mehrschichtige Matrix-Verbundwerkstoffe.

10. Baukasten von Teilen (10) nach einem der vorhergehenden Ansprüche, der ferner Elemente umfasst, um die Gießform an mindestens einem Ende entlang der Mittelachse (9) zu schließen.

11. Baukasten von Teilen (10) nach einem der vorhergehenden Ansprüche, der ferner Mittel zum Erwärmen umfasst, um den Baukasten von Teilen zu erwärmen.

12. Baukasten von Teilen (10) zum Herstellen eines Zylinders oder einer Walze, wobei der Baukasten von Teilen (10) umfasst:
mindestens einen Baukasten von Teilen nach einem der vorhergehenden Ansprüche, und
einen Zylinders oder eine Walze.

13. Verfahren zum Herstellen eines Endstücks (2) mit einem integrierten Zapfen aus einem Verbundwerkstoff aus einem metallischen, keramischen Verbundmaterial oder aus einem anderweitigen Verbundmaterial für einen Zylinder oder eine Walze, wobei das Verfahren einen Baukasten von Teilen (10) nach einem der vorhergehenden Ansprüche verwendet,
wobei das Verfahren die folgenden Schritte umfasst:
Positionieren des mindestens einen hohlen Stücks / der mindestens einen hohlen Hülse (4) in der äußeren Gießform (3), wobei das hohle Stück / die hohle Hülse (4) an die äußere Gießform (3) um ihre Umfangsoberfläche angrenzt,
Positionieren des schmelzbaren Verbundmaterials, um die innere Oberfläche der äußeren Gießform (3) und des mindestens einen hohlen Stücks / der mindestens einen hohlen Hülse (4) zu bedecken,
Positionieren der inneren Gießform (1) innerhalb der äußeren Gießform (3) derart, dass die innere Gießform (1) benachbart zu dem schmelzbaren Verbundmaterial liegt,
Verriegeln der äußeren Gießform (3) und der inneren Gießform (1) in ihren Positionen,
Erwärmen der äußeren Gießform (3), der inneren Gießform (1), des hohlen Stücks / der hohlen Hülse (4) und des schmelzbaren Verbundmaterials so lange, bis das schmelzbare Verbundmaterial ausgehärtet ist.

14. Verfahren nach Anspruch 13, das ferner den folgeden Schritt umfasst:
Kühlen des Baukastens von Teilen (10) derart, dass der innere Pfropfen schrumpft und gelöst wird und dass das gehärtete zusammengesetzte Endstück (2) aus der geschrumpften äußeren Gießform (3) in die Richtung des ersten inneren Durchmessers der äußeren Gießform (3) entlang der Mittelachse (9) gestoßen wird.

## Revendications

1. Kit de pièces (10) pour fabriquer une pièce d'extrémité (2) avec un tourillon intégré à partir d'un matériau composite pour un cylindre ou un rouleau, le kit de pièces (10) comprenant :
un moule extérieur (3) présentant un coefficient d'expansion thermique de A,
un moule intérieur (1) présentant un coefficient d'expansion thermique de B qui est supérieur à A, et
un matériau composite fusible,
dans lequel
ledit matériau composite fusible est adapté pour couvrir la surface intérieure dudit moule extérieur (3),
ledit moule intérieur (1) est adapté pour être positionné à l'intérieur dudit moule extérieur (3) de façon à ce que le moule intérieur (1) soit adjacent audit matériau composite fusible,
ledit kit de pièces comprenant en outre
un moyen de verrouillage pour verrouiller ledit moule extérieur (3) et ledit moule intérieur (1) dans leurs positions,
au moins une pièce creuse/un manchon creux (4) présentant un coefficient d'expansion thermique de C qui est inférieur à B et supérieur ou égal à A, ladite pièce creuse/ledit manchon creux (4) étant adapté pour être positionné entre la surface intérieure dudit moule extérieur (3) et ledit matériau composite fusible, la pièce creuse/le manchon creux (4) étant adjacent(e) au moule extérieur (3) autour de sa surface périphérique et le matériau composite fusible autour de sa surface intérieure.

2. Kit de pièces (10) selon la revendication précédente, dans lequel le moule extérieur (3) est creux, présentant une surface intérieure qui est essentiellement symétrique en rotation autour d'un axe central (9).

3. Kit de pièces (10) selon l'une quelconque des revendications précédentes, dans lequel la cavité du moule extérieur (3) présente un premier diamètre intérieur à une extrémité le long de l'axe central (9) qui est supérieur à un second diamètre intérieur à l'autre extrémité le long de l'axe central (9), dans lequel le diamètre intérieur n'augmente en aucun endroit le long dudit axe central (9) depuis ledit premier vers ledit second diamètre intérieur.

4. Kit de pièces (10) selon l'une quelconque des revendications précédentes, dans lequel ledit moule intérieur (1) présente essentiellement la même forme extérieure que la forme intérieure du moule extérieur (3), le moule intérieur (1) présentant un diamètre extérieur plus petit que le diamètre intérieur du moule extérieur (3).

5. Kit de pièces (10) selon l'une quelconque des revendications précédentes, dans lequel ledit moule intérieur (1) est un bouchon central solide.

6. Kit de pièces (10) selon l'une quelconque des revendications précédentes, dans lequel le coefficient d'expansion thermique A est égal au coefficient d'expansion thermique C.

7. Kit de pièces (10) selon l'une quelconque des revendications précédentes, dans lequel ladite pièce creuse/ledit manchon creux (4) a la forme contenue dans le groupe consistant en un anneau, un cylindre, un cylindre conique, un tube, un engrenage.

8. Kit de pièces (10) selon l'une quelconque des revendications précédentes, dans lequel ladite pièce creuse/ledit manchon creux (4) est adapté(e) pour engager un dispositif contenu dans le groupe consistant en par exemple
une roue d'engrenage, un palier, une surface, une roue à courroie, un mécanisme d'entraînement.

9. Kit de pièces (10) selon l'une quelconque des revendications précédentes, dans lequel le matériau fusible comprend au moins un des matériaux contenus dans le groupe des :
fibres de carbone avec moyen de collage, fibres de verre avec moyen de collage, composites renforcés, matrices composites, matrices composites spiralées ou multicouches.

10. Kit de pièces (10) selon l'une quelconque des revendications précédentes, comprenant en outre des éléments pour fermer le moule sur au moins une extrémité le long de l'axe central (9).

11. Kit de pièces (10) selon l'une quelconque des revendications précédentes, comprenant en outre des moyens de chauffage pour chauffer ledit kit de pièces.

12. Kit de pièces (10) pour fabriquer un cylindre ou un rouleau, dans lequel le kit de pièces (10) comprend
au moins un kit de pièces selon l'une quelconque des revendications précédentes et
un cylindre ou un rouleau.

13. Procédé pour fabriquer une pièce d'extrémité (2) à partir d'un matériau composite avec un tourillon intégré dans un matériau composite métallique, céramique ou autrement composite pour un cylindre ou un rouleau, le procédé utilisant
un kit de pièces (10) selon l'une quelconque des revendications précédentes,
le procédé comprenant les étapes de :
positionner ladite au moins une pièce creuse/ledit au moins un manchon creux (4) dans ledit moule extérieur (3), la pièce creuse/le manchon creux (4) étant adjacent(e) au moule extérieur (3) autour de sa surface périphérique,
positionner ledit matériau composite fusible pour couvrir la surface intérieure dudit moule extérieur (3) et ladite au moins une pièce creuse/ledit au moins un manchon creux (4),
positionner ledit moule intérieur (1) à l'intérieur dudit moule extérieur (3) de façon à ce que le moule intérieur (1) soit adjacent audit matériau fusible,
verrouiller ledit moule extérieur (3) et ledit moule intérieur (1) dans leurs positions,
chauffer ledit moule extérieur (3), ledit moule intérieur (1), ladite pièce creuse/ledit manchon creux (4) et ledit matériau fusible jusqu'à ce que le matériau fusible ait durci.

14. Procédé selon la revendication 13, comprenant en outre l'étape de :
refroidir ledit kit de pièces (10) de façon à ce que le bouchon intérieur rétrécisse et soit libéré et que la pièce d'extrémité composite durcie (2) soit poussée hors du moule extérieur (3) rétréci dans la direction dudit premier diamètre intérieur du moule extérieur (3) le long de l'axe central (9).
